Europäisches Patentamt

European Patent Office

Office européen des brevets

(19)

(11) Numéro de publication: **0 307 283**
**A1**

(12) **DEMANDE DE BREVET EUROPEEN**

(21) Numéro de dépôt: **88402187.4**

(22) Date de dépôt: **30.08.88**

(51) Int. Cl.4: **H 04 N 13/00**

(30) Priorité: **04.09.87 FR 8712332**

(43) Date de publication de la demande:
**15.03.89 Bulletin 89/11**

(84) Etats contractants désignés: **DE GB IT**

(71) Demandeur: **THOMSON-CSF**
**173, Boulevard Haussmann**
**F-75379 Paris Cédex 08 (FR)**

(72) Inventeur: **Sergent, Paul**
**Thomson-CSF SCPI 19, avenue de Messine**
**F-75008 Paris (FR)**

**Dansac, Jean**
**Thomson-CSF SCPI 19, avenue de Messine**
**F-75008 Paris (FR)**

(74) Mandataire: **Trocellier, Roger et al**
**THOMSON-CSF SCPI 19, avenue de Messine**
**F-75008 Paris (FR)**

(54) **Système de visualisation stéréoscopique utilisant une caméra montée sur un porteur mobile.**

(57) Système permettant la restitution stéréoscopique d'une scène observée par une caméra unique.

Le signal vidéo (SV) fourni par la caméra (1) est envoyé à deux écrans de télévision (5,6). Chacun d'eux est vu par un seul oeil (OG,OD) de l'observateur. Une première image, celle en cours de détection, est présentée immédiatement. L'autre image est retardée dans des circuits (10) avant d'être présentée. Le retard appliqué correspond à la prise de vue faite à un instant antérieur (T1) par la caméra. Il est réglable en fonction des conditions de prise de vue et de l'effet stéréoscopique recherché.

L'invention s'applique notamment en avionique, par exemple pour l'aide à la navigation de nuit et la reconnaissance aérienne.

FIG.2

EP 0 307 283 A1

## Description

## SYSTEME DE VISUALISATION STEREOSCOPIQUE UTILISANT UNE CAMERA MONTEE SUR UN PORTEUR MOBILE

La présente invention concerne un système de visualisation stéréoscopique utilisant une caméra montée sur un porteur mobile (véhicule, aéronef, ou autre).

La reconstitution du relief à partir d'images planes peut-être obtenue de plusieurs manières selon les techniques photographiques utilisées. On connaît notamment la stéréophotographie vieille de plus d'un siècle, la cartographiue aérienne à partir d'un aéronef ou d'un satellite, et la photogrammétrie qui est une technique généralisant les techniques cartographiques et introduisant des traitements mathématiques le plus souvent complexes.

La vision du relief nous est naturellement possible grâce aux informations perçues simultanément par les deux yeux. Chaque oeil perçoit de la scène qu'il a devant lui des images qui différent par le point d'observation. La notion de relief résulte de la différence de perspective des images du fait que chaque oeil voit la même scène sous deux angles différents, et également de la conjonction des informations de convergence oculaire et d'accommodation. Du point de vue pratique, l'observation de couples d'images stéréoscopiques dont les effets peuvent être particulièrement saisissants, montrent que la différence de perspective suffit largement à la perception du relief. En particulier, deux prises de vue d'une scène effectuées à axes optiques parallèles conviennent parfaitement à reconstituer le relief pour tous les points de l'image présentée. En outre, le relief peut être perçu à partir de deux images d'une même scène prisent de deux points de vue distincts, mais dans des conditions assez éloignées des conditions normales de vision ; la longueur de base entre les optiques peut être ainsi choisie bien supérieure à la distance interpupillaire. Cette disposition est connue et utilisée notamment dans des systèmes binoculaires d'artillerie. Il en résulte une sensation de perception du relief à une distance beaucoup plus grande que dans la réalité.

La perception du relief peut constituer une aide importante à la conduite de certains véhicules ou à leur exploitation dans des conditions particulières, entre autre pour assurer pour assurer l'aide à la navigation de nuit d'un aéronef, la conduite d'engins, pour la reconnaissance de formes ou la reconnaissance aérienne.

Il est connu par le brevet FR-A-2 517 916 de réaliser un appareil d'observation stéréoscopique qui utilise deux capteurs optoélectriques d'image vidéo, tels des caméras, dont les axes sont parallèles et l'entre-axe réglable et dont les images vidéo, éventuellement traitées, sont ensuite visualisées en utilisant deux tubes cathodiques ou un tube sur lequel chaque image occupe la moitié de l'écran.

L'objet principal de l'invention est de réaliser un système de visualisation permettant la restitution stéréoscopique d'une scène observée par une unique caméra qui se déplace par rapport à la scène, la restitution pouvant être obtenue en temps réel au cours même de l'observation, ou bien ultérieurement, le signal vidéo d'image ayant été stocké dans une mémoire ou enregistré par exemple sur un film vidéo avec un dispositif magnétoscope.

Selon l'invention il est réalisé un système de visualisation stéréoscopique comportant des moyens de prise de vue d'image vidéo d'une scène observée sous des angles différents montés sur un porteur mobile, et des moyens de visualisation desdites images utilisant deux moniteurs vidéo pour l'observation stéréoscopique de la scène, le système étant caractérisé en ce que les moyens de prise de vue comprennent une seule caméra vidéo, le signal vidéo détecté par la caméra étant appliqué à deux moniteurs directement pour l'un et à travers un circuit de retard pour l'autre, en sorte qu'une première image visualisée sur un premier moniteur a été détectée à compter d'un premier instant où le caméra a présenté une première position par rapport à la scène observée et que la deuxième image visualisée par le deuxième moniteur a été détectée à compter d'un deuxième instant ultérieur au premier instant et où la caméra a présenté une deuxième position par rapport à la scène observée par suite du mouvement du porteur entre ces deux instants, le décalage temporel entre ces instants correspondant au retard apporté par le circuit de retard.

Les caractéristiques et avantages de l'invention apparaîtront dans la description qui suit donnée à titre d'exemple à l'aide des figures annexées qui représentent :

- Fig.1, un schéma du principe mis en oeuvre selon l'invention pour effectuer la prise de vue stéréoscopique et en fonction des paramètres distance d'éloignement et champ d'observation ;

- Fig.2, un bloc-diagramme général d'un système de visualisation stéréoscopique conforme à l'invention ;

- Fig.3, un bloc-diagramme simplifié du circuit de retard conçu sous forme d'une mémoire ;

- Fig.4, un bloc diagramme fonctionnel détaillé du circuit selon la figure 3 ;

- Fig.5, une variante de réalisation du circuit selon la figure 4 aménagé pour obtenir l'arrêt sur image.

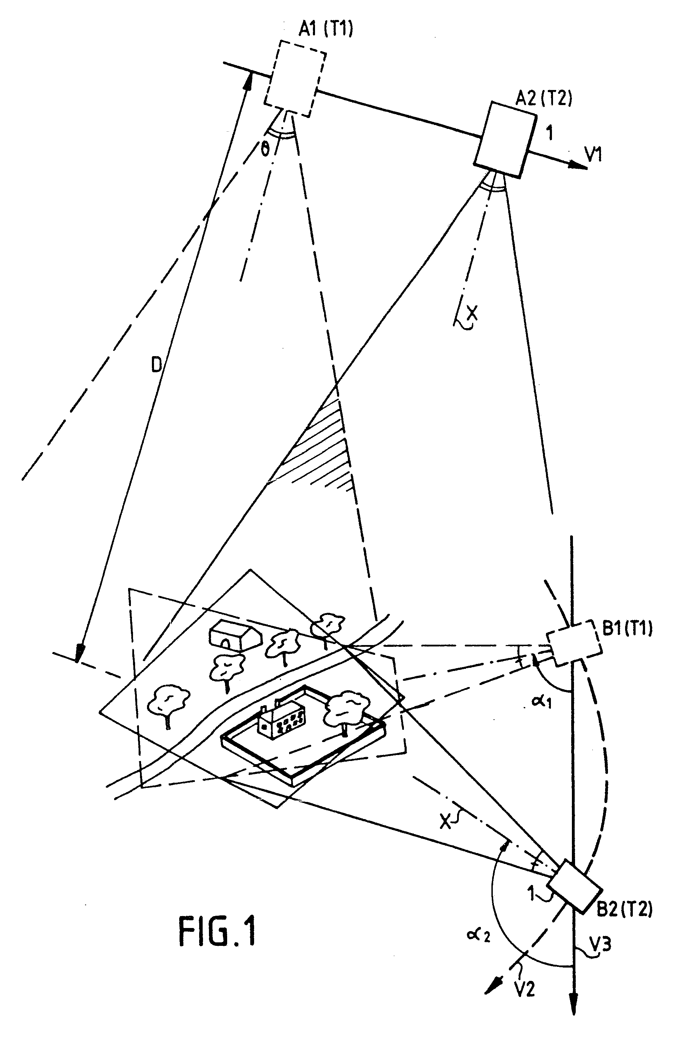

En se reportant à la figure 1, il a été indiqué en haut de la figure la caméra 1 selon deux positions successives, une première position A1 à l'instant T1 et à la position A2 ultérieure à un instant T2. V1 représente la trajectoire suivie par le porteur non figuré, trajectoire considérée rectiligne entre les instants T1 et T2, ce qui est généralement le cas si ces instants sont assez rapprochés. Ce premier mode de prise de vue à axes parallèles pour les deux positions A1 et A2 convient, comme on peut s'en rendre compte, pour un champ θ observé par la caméra assez important et tant que la distance d'éloignement D entre la caméra et la scène ne devient pas trop élevée. Plus la distance D croît pour un champ θ donné, plus l'intervalle de temps T2-T1 entre les instants T2 et T1 devra être réduit.

L'autre configuration indiquée en bas à droite pour une première position B1 de la caméra à l'instant T1 et une deuxième position B2 à instant T2 peut convenir pour une trajectoire courbe V2, la position de la caméra n'ayant pas changé sur l'organe porteur. Dans le cas d'une trajectoire rectiligne V3 on voit que l'inclinaison entre l'axe X de visée de la caméra et la direction V3 de la trajectoire a dû être modifiée entre les deux instants T1 et T2, ce qui implique une commande de positionnement de la caméra pour maintenir son axe de visée pointé en direction de la scène. Ce pointage automatique de la caméra est réalisé par un dispositif auxiliaire qui peut être constitué par un circuit de poursuite automatique de cible ou par un système de navigation avion pour une caméra aéroportée.

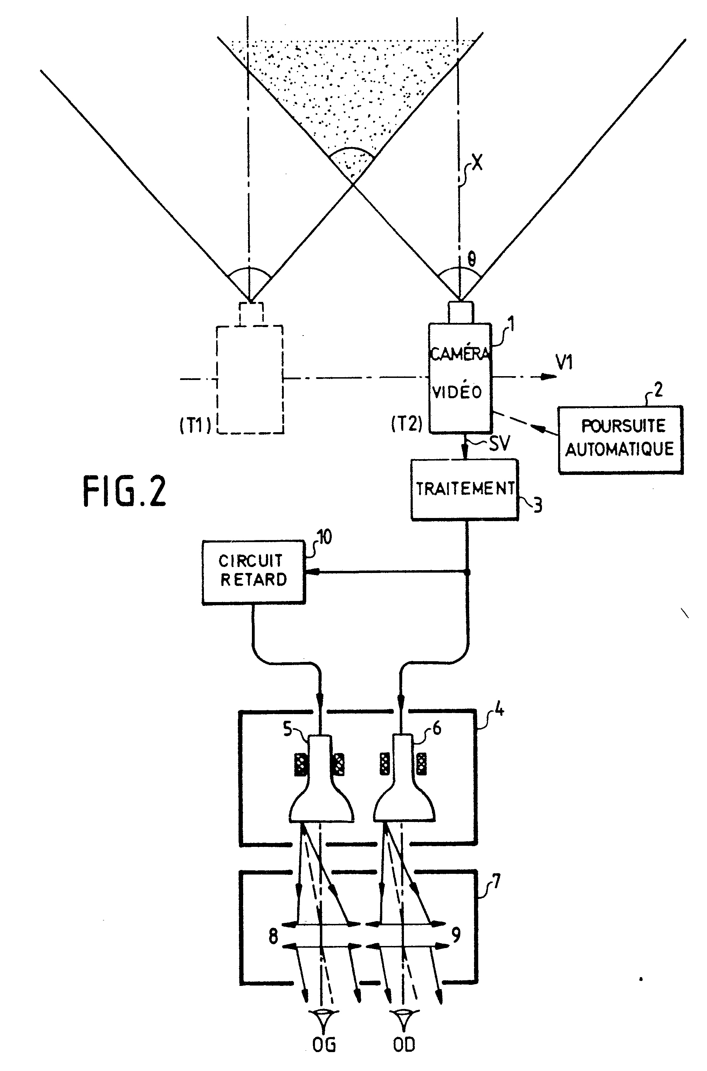

La figure 2 représente le système comportant la caméra 1 dans sa situation à l'instant T2. Sa position à l'instant T1 est indiquée en pointillé. La caméra 1 est montée à bord d'un porteur mobile non figuré, par exemple un aéronef. On a représenté un déplacement à axes parallèles, la trajectoire du porteur est indiquée par V1. En cas de pointage sur cible et rotation de la caméra entre les deux positions, le pointage automatique est assuré par un dispositif annexe de recalage ou de poursuite automatique 2, selon des techniques connues. Le signal vidéo SV produit par la caméra est éventuellement traité dans des circuits de traitement 3 par exemple pour accentuer le contraste ou les contours, avant d'être appliqué à un ensemble de visualisation qui peut également être installé à bord du porteur, ou situé à distance comme on le verra ultérieurement.

Le signal vidéo est appliqué dans cet ensemble à un premier moniteur de visualisation représenté par un tube cathodique 5 à travers un circuit de retard 10 et directement à un deuxième moniteur de visualisation 6 représenté également par un tube cathodique. L'ensemble des deux moniteurs 4 est complété par un dispositif 7 permettant la vision stéréoscopique des deux images. Dans le cas représenté qui doit être considéré à titre d'exemple, il est prévu d'utiliser des tubes cathodiques 5 et 6 miniatures suivis chacun d'une optique collimatrice respectivement 8 et 9 pour produire l'image retardée fournie par le tube 5 vers l'oeil gauche OG par exemple, tandis que l'image qui vient d'être détectée est transmise à travers le tube cathodique 6 vers l'oeil droit OD de l'observateur. D'autres techniques de visualisation en 7 peuvent être utilisées telle que la projection sur écran avec sélection spectrale ou avec polarisation l'observation de l'image s'effectue ensuite avec des lunettes correspondantes, filtrantes ou à polariseurs, pour sélectionner les images en fonction de leur bande spectrale ou de leur état de polarisation.

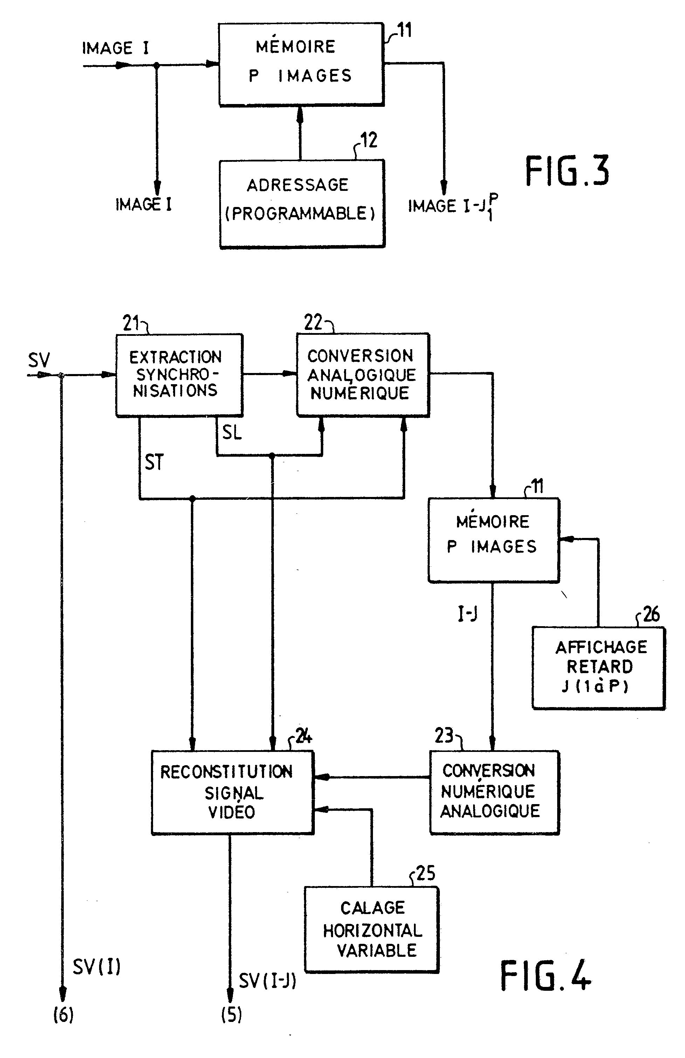

Le circuit de retard est composé de préférence comme indiqué sur la figure 3 par une mémoire 11 dans laquelle on peut enregistrer plusieurs images successives, cette mémoire étant adressée par un circuit 12 qui peut consister en un ensemble programmable à microprocesseur. Ce montage permet de réaliser un retard variable en fonction des conditions distance d'éloignement et de champ d'observation par programmation du circuit 12. Ce circuit assure à la fois l'écriture de l'image de rang I en cours de détection dans la mémoire 11 et le prélèvement en sortie de l'image de rang I-J (J variant de 1 à P) qui avait été enregistré à un instant antérieur T1 et que l'on veut utiliser pour la restitution stéréoscopique. La programmation permet de choisir le rang I-J et donc de faire varier l'intervalle de temps T2-T1.

L'image de rang I en cours de détection est présentée immédiatement. L'autre image de rang I-J se trouve retardée par la durée correspondant à la détection de J images successives stockées dans la mémoire 11. Le retard appliqué est fonction des conditions de la prise de vue détaillées précédemment à l'aide de la figure 1 et de l'effet stéréoscopique recherché. Pour cette raison il est rendu avantageusement réglable et variable. Ce retard peut atteindre, par exemple, une ou plusieurs secondes dans le cas de véhicules terrestres, atmosphériques. Il peut être encore plus important pour des véhicules exoatmosphériques (satellites).

Les images présentées ainsi à chaque oeil sont représentatives des points de vue successifs aux instants T1 et T2.

La mémoire numérique 11 de capacité maximale P images, réglable de une à P images est organisée sur le principe premier entré, premier sorti. La capacité est telle qu'elle contient toutes les images prises par la caméra pendant le temps équivalent au retard nécessaire T2-T1 et qu'elle les restitue au même rythme que le signal original et dans le même ordre. Ce retard a été chiffré en nombre d'images. Ainsi, pour l'image suivante I+1, on produit à la sortie de la mémoire l'image de rang I-P+1, et ainsi de suite.

La figure 4 donne une représentation plus détaillée du circuit de retard à mémoire. On y retrouve la mémoire 11. Le signal SV de la caméra est appliqué préalablement à un circuit 21 d'extraction des signaux de synchronisation ligne SL et trame ST ; la partie vidéo est convertie en numérique dans le circuit 22 avant d'être stockée dans la mémoire d'image 11. Le circuit 26 permet d'afficher un retard de une à P images. Le circuit 26 peut consister en un affichage manuel actionné par l'opérateur, ou semi-automatique relayé par le processeur non figuré, ou automatique à la charge du processeur selon une programmation préétablie.

L'image de rang I-J sélectionnée est reconvertie en analogique par un circuit 23 et ce signal vidéo est reconstitué en 24 avec les synchronisations ligne et trame. Le signal résultant SV(I-J) désigne le signal vidéo retardé correspondant à la deuxième image I-J et délivré par le circuit 24.

Un circuit additionnel 25 peut être prévu pour effectuer un calage horizontal réglable de la vidéo par rapport à la synchronisation ligne de manière à bien superposer les deux images au cas ou un léger parallaxe horizontal est perçu à la visualisation et gêne l'observateur. Le circuit 25 consiste en un réglage manuel actionné par l'utilisateur.

Le circuit 25 accroît le confort de l'observateur en permettant de modifier légèrement (maximum 10% de la durée d'une ligne) la position de l'image par rapport au cadre de l'écran jusqu'à ce que l'observateur ait la sensation que les deux images qu'il perçoit séparément soient superposées.

Avec une présentation aux deux yeux de l'observateur effectuée sur deux écrans comme par exemple dans le cas de la figure 2 sur les écrans des tubes 5 et 6 respectivement il n'est pas indispensable que les signaux vidéo fournis à ces deux écrans soient synchronisés entre eux.

Si le signal vidéo produit par la caméra est déjà fourni sous forme numérique, les circuits 21,22,23,24 et 25 ne sont pas utilisés.

La restitution stéréoscopique peut être utilisée sur des scènes figées (arrêt sur image) ou sur la succession des images prises au cours du déplacement du dispositif porteur. Pour figer l'observation, dans le but par exemple de faire un examen plus approfondi, ou des mesures, deux cas sont possibles.

Si le signal vidéo SV est délivré par l'intermédiaire d'un dispositif enregistreur-lecture capable d'un arrêt sur image de bonne qualité comme le sont certains magnétoscopes, le dispositif mémoire agencé selon la figure 4 est utilisable sans modification.

Par contre, si le signal vidéo SV est celui fourni directement par la caméra, il est nécessaire d'utiliser une mémoire de capacité égale à une image pour alimenter la voie 6 destinée à un oeil ; il doit être également prévu un ordre d'arrêt pour figer le contenu de la mémoire de P images destiné à l'autre oeil par la voie 5. On pourra utiliser deux mémoires distinctes, ou la mémoire de P images comme représenté en prélevant dans celle-ci la première image I et l'image de rang I-P ou I-J désirée selon que le retard affiché est égal à P ou inférieur à celui-ci. Le montage est complété par des circuits commutateurs 31 et 32. Le commutateur 31 permet de se connecter sur une voie additionnelle comportant un convertisseur numérique analogique 33 pour traduire l'image I sur laquelle on désire s'arrêter en analogique et reconstituer cette image avec les signaux de synchronisation SL,ST dans un circuit de reconstitution 34. On obtient le signal SV (I) de l'image I transmis vers le moniteur 6 à travers le circuit commutateur 31.

Le deuxième commutateur 32 sur la position d'arrêt sur image, transmet un ordre correspondant, par exemple sous forme d'un bit de valeur 1 au circuit processeur 12 qui, sur réception de cette information, fige le contenu des P images stockées dans la mémoire 11 et déclenche l'extraction d'une part, de la dernière image I stockée et d'autre part, de celle I-J correspondant au retard affiché dans le circuit 26.

En fonctionnement normal (Fig.4), les informations stockées dans la mémoire 11 sont transportées d'une zone mémoire I-K correspondant à une image à la zone suivante I-K + 1, la première zone recevant une nouvelle image I et la sortie délivrant l'image la plus ancienne I-P stockée.

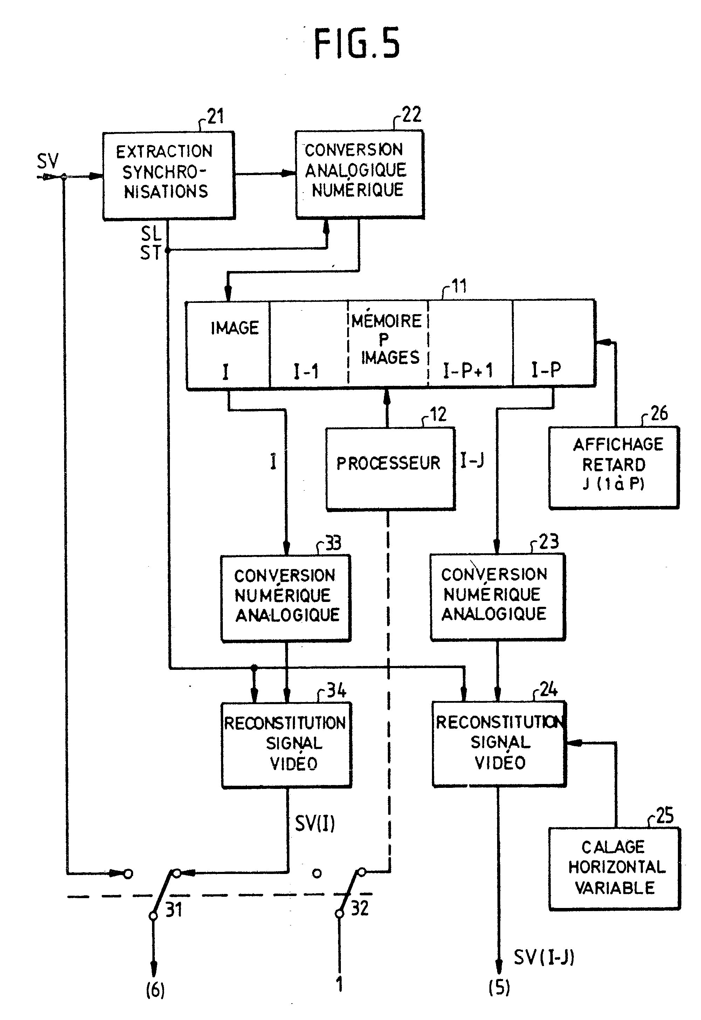

En fonctionnement arrêt sur image (Fig.5) les informatioons lues dans chaque zone ne sont pas translatées vers la zone de rang suivant ; elles sont immédiatement réinscrites dans la même zone.

La technique mise en oeuvre est utilisable pour des signaux provenant d'une caméra fournissant une image télévision (caméra de télévision, caméra thermique), portée par un aéronef, en interne ou en nacelle externe, capable d'observer un même but pendant un temps au plus égal à P images. L'utilisation est envisageable également pour des signaux provenant d'une caméra de télévision portée par un véhicule terrestre.

Dans tous les cas de figure, les images détectées par la caméra peuvent, avant restitution stéréoscopique, être stockées préliminairement (la technique généralement utilisée étant l'enregistrement sur une bande vidéo avec un dispositif magnétoscope), la restitution s'effectuant ultérieurement.

D'autres variantes conformes à l'invention sont envisageables. Comme on l'a vu précédemment, le système nécessite une caméra en mouvement mais l'ensemble de visualisation stéréoscopique qui exploite le signal détecté n'a pas besoin d'être installé à bord du porteur mobile. En conséquence, l'exploitation peut s'opérer à distance, loin du porteur moyennant une transmission d'image ( hertzienne, optique, par câble ou fibre optique, etc...). Cette exploitation à distance peut s'effectuer en temps réel, ou en temps différé si l'on enregistre préalablement les images transmises.

## Revendications

1. Système de visualisation stéréoscopique comportant des moyens de prise de vue d'image vidéo d'une scène observée sous deux angles différents montés sur un porteur mobile, et des moyens de visualisation des deux images utilisant deux moniteurs vidéo pour l'observation stéréoscopique de la scène, caractérisé en ce que les moyens de prise de vue comportent une seule caméra vidéo (1), le signal vidéo (SV) détecté par la caméra étant appliqué à travers un circuit de retard (10) à un premier moniteur (5) et directement au deuxième moniteur (6), en sorte qu'une première image de la scène visualisée à l'instant présent par le premier moniteur a été détectée à un instant antérieur (T1) où la caméra a présenté une première position par rapport à la scène observée, et que la deuxième image visualisée par le deuxième moniteur (6) est détectée à l'instant présent (T2) ultérieur au précédent et où la caméra présente une deuxième position par rapport à la scène observée par suite du mouvement du porteur entre ces deux instants, le décalage temporel entre ces deux instants correspondant au retard apporté par ledit circuit de retard.

2. Système selon la revendication 1, caractérisé en ce que le signal vidéo détecté par la caméra est préalablement stocké sur un film vidéo par un dispositif du type magnétoscope.

3. Système selon la revendication 1 ou 2, caractérisé en ce que ledit circuit de retard (10) est ajustable.

4. Système selon l'une quelconque des revendications 1 à 3, caractérisé en ce que le circuit de retard est une mémoire (11) dans laquelle on peut stocker une pluralité de P images.

5. Système selon l'ensemble des revendications 3 et 4, caractérisé en ce que ladite mémoire (11) est adressée par un circuit processeur programmable (12) pour extraire une image de rang J compris entre 1 et P, en fonction du retard désiré pour l'exploitation.

6. Système selon la revendication 5, caractérisé en ce que ledit circuit mémoire comporte un organe d'affichage (26) du retard J désiré, ainsi qu'un circuit de calage horizontal variable (25) de l'image de rang J pour la perception usuelle d'images non décalées horizontalement.

7. Système selon la revendication 6, caractérisé en ce qu'il comporte, en outre, des moyens d'arrêt sur image consistant en un premier circuit de commutation (32) pour transmettre un ordre d'arrêt audit circuit processeur (12) pour figer l'état de la mémoire (11) et commander l'extraction de l'image de rang I la dernière stockée et celle de rang I-J correspondant au retard sélectionné, et un deuxième circuit commutateur (31) pour commuter la voie vidéo non retardée sur la sortie vidéo correspondant à l'image de rang I extraite de la mémoire (11).

8. Système selon l'une quelconque des revendications précédentes, caractérisé en ce qu'il comporte en outre des moyens de poursuite automatique (2) pour asservir l'axe de visée (X) de la caméra en direction d'une cible à détecter en fonction de la trajectoire du porteur mobile.

9. Système selon l'une quelconque des revendications précédentes, caractérisé en ce que les moyens de visualisation sont situés à bord du porteur mobile.

10. Système selon l'une quelconque des revendications précédentes, caractérisé en ce que les moyens de visualisation sont situés à distance du porteur mobile moyennant une transmission d'image vidéo à distance.

11. Système selon la revendication 9 ou 10, utilisé pour la restitution stéréoscopique des signaux provenant d'une caméra de télévision portée par un aéronef.

FIG.1

FIG.2

IMAGE I →

MÉMOIRE
P IMAGES  ⌐11

↓ IMAGE I

ADRESSAGE
(PROGRAMMABLE)  ⌐12

IMAGE I-J$_1^P$

# FIG.3

SV →

EXTRACTION
SYNCHRO-
NISATIONS  ⌐21

CONVERSION
ANALOGIQUE
NUMÉRIQUE  ⌐22

SL

ST

MÉMOIRE
P IMAGES  ⌐11

I-J

AFFICHAGE
RETARD
J (1 à P)  ⌐26

RECONSTITUTION
SIGNAL
VIDÉO  ⌐24

CONVERSION
NUMÉRIQUE
ANALOGIQUE  ⌐23

CALAGE
HORIZONTAL
VARIABLE  ⌐25

SV(I)

SV(I-J)

(6)

(5)

# FIG.4

# FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | FR-A-2 517 916 (THOMSON-CSF) <br> * Page 3, ligne 31 - page 7, ligne 5; figure 1 * <br> --- | 1 | H 04 N 13/00 |
| Y | PATENT ABSTRACTS OF JAPAN, vol. 6, no. 259 (E-149)[1137], 17 décembre 1982, page 12 E 149; & JP-A-57 154 989 (NIHON HAAZEN K.K.) 24-09-1982 <br> * Résumé * | 1 | |

**DOMAINES TECHNIQUES RECHERCHES (Int. Cl.4)**

H 04 N
G 03 B

Le présent rapport a été établi pour toutes les revendications

| Lieu de la recherche | Date d'achèvement de la recherche | Examinateur |
|---|---|---|
| LA HAYE | 13-12-1988 | BEQUET T.P. |